# EUROPEAN PATENT SPECIFICATION

(11) **EP 3 426 467 B1**
(45) Date of publication and mention of the grant of the patent: **24.02.2021**
(21) Application number: 16901860.3
(22) Date of filing: 12.05.2016
(51) Int. Cl.: B33Y 40/00, B33Y 50/02, B29C 64/165, B29C 64/393

(54) **3D PRINTING HEAT SINKS**
3D-DRUCKKÜHLKÖRPER
DISSIPATEURS THERMIQUES POUR IMPRESSION 3D

(43) Date of publication of application: 16.01.2019
(73) Proprietor: Hewlett-Packard Development Company, L.P., Spring TX 77389 (US)
(72) Inventor: PUIGARDEU ARAMENDIA, Sergio, 08174 Sant Cugat del Valles (ES); RAMIREZ MUELA, David, 08174 Sant Cugat del Valles (ES); GARCIA GARCIA, Luis, 08174 Sant Cugat del Valles (ES)
(74) Representative: HGF
(86) International application number: PCT/US2016/032109
(87) International publication number: WO 2017/196346

(56) References cited:
- WO-A1-2012/164015
- WO-A1-2015/106816
- WO-A1-2015/167520
- WO-A1-2016/050319
- WO-A1-2016/057034
- WO-A2-2004/005014
- WO-A2-2015/108546
- WO-A2-2015/108546

## Description

### BACKGROUND

In three-dimensional (3D) printing, an additive printing process may be used to make three-dimensional solid parts from a digital model. 3D printing may be used in rapid product prototyping, mold generation, mold master generation, and short run manufacturing. Some 3D printing techniques are considered additive processes because they involve the application of successive layers of material. This is unlike traditional machining processes, which often rely upon the removal of material to create the final part. In 3D printing, the building material may be cured or fused, which for some materials may be performed using heat-assisted extrusion, melting, or sintering, and for other materials, may be performed using digital light projection technology.

WO 2015/108546 discloses that a three-dimensional object may be generated. Energy may be applied to a layer of build material to cause a first portion of the layer to coalesce and solidify in a first pattern. A cooling agent may be selectively delivered on a second portion of the layer of the build material to reduce a temperature of the second portion in a second pattern, the first and second patterns being independent of each other.

WO 2015/167520 discloses a computational modeling method for identifying how to apply a modifying agent during a three-dimensional (3D) printing method, and a thermal diffusion model of a layer of a 3D object to be formed from a portion of a sinterable material using the 3D printing method is created. The thermal diffusion model is created by a computer running computer readable instructions stored on a non-transitory, tangible computer readable storage medium. A quantity of the modifying agent to be selectively applied is calculated, by the computer, based upon the thermal diffusion model.

WO 2015/106816 discloses apparatus for generating a three- dimensional object. The apparatus comprises a first agent distributor to selectively deliver a coalescing agent onto portions of a layer of build material, a second agent distributor to selectively deliver a coalescence modifier agent onto portions of a layer of build material, and a controller to control the agent distributors to selectively deliver each of the agents onto a layer of build material in respective patterns derived from data representing a slice of a three-dimensional object to be generated, so that when energy is applied to the layer the build material coalesces and solidifies to form a slice of the three-dimensional object in accordance the patterns.

### BRIEF DESCRIPTION OF THE DRAWINGS

Features of the present disclosure are illustrated by way of example and not limited in the following figure(s), in which like numerals indicate like elements, in which:
FIG. 1A shows a simplified isometric view of an example three-dimensional (3D) printer for generating, building, or printing three-dimensional parts;
FIG. 1B shows a simplified top view of an example plurality of parts in the process of being formed of build materials located in preselected areas of a layer of the build materials;
FIG. 1C shows an example graph of a temperature distribution across a portion of the first part shown in FIG. 1B following application of fusing radiation onto the first part;
FIG. 2 shows a simplified block diagram of an example computing apparatus that may be implemented in the 3D printer depicted in FIG. 1A; and
FIGS. 3 and 4, respectively, depict methods for controlling delivery of liquid droplets to include distributed gaps that are to form heat sinks.

### DETAILED DESCRIPTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. As used herein, the terms "a" and "an" are intended to denote at least one of a particular element, the term "includes" means includes but not limited to, the term "including" means including but not limited to, and the term "based on" means based at least in part on.

Disclosed herein, and according to the invention, are the 3D printer of claim 1, the method of claim 8 for implementing the 3D printer, and the computer readable medium of claim 13 on which is stored instructions corresponding to the methods. In the methods, a controller may determine a distribution at which gaps are to be formed in the delivery of liquid droplets by a delivery device onto a layer of build materials, in which the gaps are to form heat sinks in the build materials that are to prevent heat spikes from occurring across the build materials. For instance, in forming a part of a 3D object from build materials in a layer, the delivery device may deposit the liquid droplets onto the portions of the build materials that are to be fused together to form the part, in which the liquid droplets may increase absorption of energy by the build materials upon which the liquid droplets have been deposited. In some instances, such as when a relatively large amount of liquid droplets are deposited to form a part, the temperatures of the build materials that are to form the part may not be uniform across the part. That is, there may be areas at which the build materials have temperatures that spike above other areas of the build materials, for instance, due to the larger concentrations of the liquid droplets in those areas and thus, higher heat absorption rates at those areas.

According to an example, a distribution at which gaps are formed in the delivery of the liquid droplets may be determined such that the heat spikes may be avoided and that the build materials forming the part may be in thermal uniformity with each other. That is, the gaps may form heat sinks that may absorb heat through thermal bleeding from the build materials upon which the liquid droplets have been deposited. In addition, the build materials in the gaps may also become fused together through absorption of the heat. In one regard, by selectively forming the heat sinks, excess heat from some of the build materials may be dissipated to other build materials that are to form a part to thus enable heat to be more evenly distributed across those build materials. The formation of the heat sinks as disclosed herein may enable build materials to be more evenly fused together to form the part regardless of the part geometry or size. In addition, formation of the heat sinks as disclosed herein may also enable for smaller parts to be formed next to or in relatively close proximity to larger parts as the amount of thermal bleed from the larger parts may be reduced.

According to an example, a delivery device may be controlled to deliver the liquid droplets based upon print data, in which the print data may be modified to include the gaps. For instance, a mask that identifies when the gaps are to be formed during the delivery of the liquid droplets may be generated and implemented during application of the liquid droplets onto a preselected area of a layer of build materials to form a part from the build materials in the preselected area. In a further example, another delivery device may be controlled to deliver second liquid droplets into the gaps formed between the liquid droplets. In this example, the second liquid droplets may be detailing agent droplets and the liquid droplets may be fusing agent droplets. In addition, an opposite mask to the one discussed above may be used to identify when the second liquid droplets are to be deposited such that the second liquid droplets may be provided in the gaps.

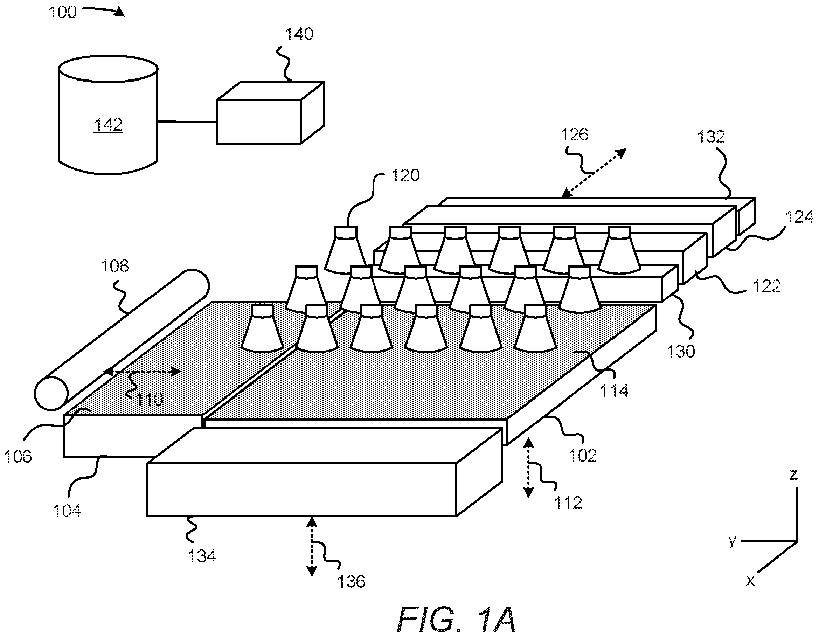

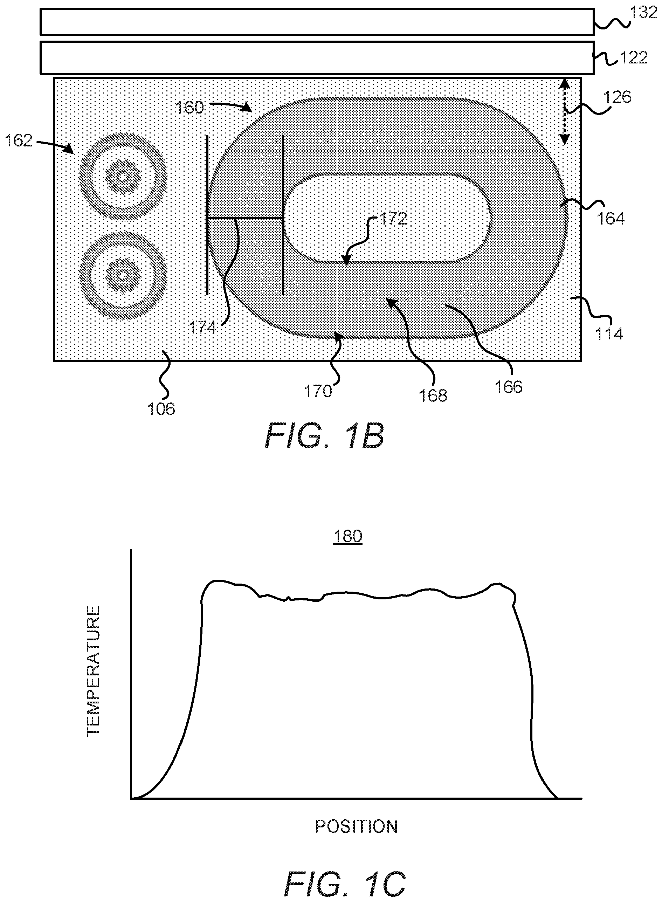

With reference first to FIG. 1, there is shown a simplified isometric view of an example three-dimensional (3D) printer 100 for generating, building, or printing three-dimensional parts. It should be understood that the 3D printer 100 depicted in FIG. 1 may include additional components and that some of the components described herein may be removed and/or modified without departing from a scope of the 3D printer 100 disclosed herein.

The 3D printer 100 is depicted as including a build area platform 102, a build material supply 104 containing build materials 106, and a recoater 108. The build material supply 104 may be a container or surface that is to position build materials 106 between the recoater 108 and the build area platform 102. The build material supply 106 may be a hopper or a surface upon which the build materials 106 may be supplied, for instance, from a build material source (not shown) located above the build material supply 104. Additionally, or alternatively, the build material supply 104 may include a mechanism to provide, e.g., move, the build materials 106 from a storage location to a position to be spread onto the build area platform 102 or a previously formed layer of build materials 106. For instance, the build material supply 104 may include a hopper, an auger conveyer, or the like. Generally speaking, 3D objects or parts are to be generated from the build materials 106 and the build materials 106 may be formed of any suitable material including, but not limited to, polymers, metals, and ceramics. In addition, the build materials 106 may be in the form of a powder.

The recoater 108 may move in a direction as denoted by the arrow 110, e.g., along the y-axis, over the build material supply 104 and across the build area platform 102 to spread the build materials 106 into a layer 114 over a surface of the build area platform 102. The layer 114 may be formed to a substantially uniform thickness across the build area platform 102. In an example, the thickness of the layer 114 may range from about 90 µm to about 110 µm, although thinner or thicker layers may also be used. For example, the thickness of the layer 114 may range from about 20 µm to about 200 µm, or from about 50 µm to about 200 µm. The recoater 108 may also be returned to a position adjacent the build material supply 104 following the spreading of the build materials 106. In addition, or alternatively, a second build material supply (not shown) may be provided on an opposite side of the build area platform 102 and the recoater 108 may be positioned over the second build material supply after forming the layer of build materials 106. The recoater 108 may be a doctor blade, roller, a counter rotating roller or any other device suitable for spreading the build materials 106 over the build area platform 102.

The 3D printer 100 is also depicted as including a plurality of warming devices 120 arranged in an array above the build area platform 102. Each of the warming devices 120 may be a lamp or other heat source that is to apply heat onto spread layers of the build materials 106, for instance, to maintain the build materials 106 within a predetermined temperature range. The warming devices 120 may maintain the temperatures of the build materials 106 at a relatively high temperature that facilitates the selective fusing of the build materials 106. That is, the warming devices 120 may maintain the build materials 106 at a sufficiently high temperature that enables the build materials 106 upon which fusing agent droplets are provided to fuse together upon receipt of fusing radiation without causing the build materials 106 to otherwise fuse together. The warming devices 120 may be activated in a non-continuous manner such that the build materials 106 may be kept within a predetermined temperature range as various processes, including application of fusing radiation, are performed on the build materials 106.

The 3D printer 100 is further depicted as including a first delivery device 122 and a second delivery device 124, which may both be scanned across the layer 114 on the build area platform 102 in both of the directions indicated by the arrow 126, e.g., along the x-axis. For instance, the first delivery device 122 may deposit first liquid droplets as the first delivery device 122 is scanned in a positive x direction 126 and the second delivery device 124 may deposit second liquid droplets as the second delivery device 124 is scanned in a negative x direction 126. The first delivery device 122 and the second delivery device 124 may be thermal inkjet printheads, piezoelectric printheads, or the like, and may extend a width of the build area platform 102. The first delivery device 122 and the second delivery device 124 may each include a printhead or multiple printheads available from the Hewlett Packard Company of Palo Alto, California. Although the first delivery device 122 and the second delivery device 124 have each been depicted in FIG. 1 as being formed of separate devices, it should be understood that each of the first delivery device 122 and the second delivery device 124 may be included on the same printhead. For instance, the first delivery device 122 may include a first set of actuators and nozzles in a printhead and the second delivery device 124 may include a second set of actuators and nozzles in the printhead.

In other examples in which the first delivery device 122 and the second delivery device 124 do not extend the width of the build area platform 102, the first delivery device 122 and the second delivery device 124 may also be scanned along the y-axis to thus enable the first delivery device 122 and the second delivery device 124 to be positioned over a majority of the area above the build area platform 102. The first delivery device 122 and the second delivery device 124 may thus be attached to a moving XY stage or a translational carriage (neither of which is shown) that is to move the first delivery device 122 and the second delivery device 124 adjacent to the build area platform 102 in order to deposit respective liquids in predetermined areas of the layer 114 of the build materials 106.

Although not shown, the first delivery device 122 and the second delivery device 124 may each include a plurality of nozzles through which the respective liquid droplets are to be ejected onto the layer 114. The first delivery device 122 may deposit a first liquid and the second delivery device 124 may deposit a second liquid. The first liquid and the second liquid may both be fusing agents, may both be detailing agents, or one may be a fusing agent and the other may be detailing agent. A fusing agent may be a liquid that is to absorb fusing radiation (e.g., in the form of light and/or heat) to cause the build materials 106 upon which the fusing agent has been deposited to fuse together when the fusing radiation is applied. A detailing agent may be a liquid that may absorb significantly less of the fusing radiation as compared with the fusing agent. In one example, the detailing agent may prevent or significantly reduce the fusing together of the build materials 106 upon which the detailing agent has been deposited. In other examples, the detailing agent may be implemented to provide coloring to exterior portions of the build materials 106 that have been fused together.

The first liquid and the second liquid may also include various additives and/or catalysts that either enhance or reduce radiation absorption. For instance, the first liquid may include a radiation absorbing agent, i.e., an active material, metal nanoparticles, or the like. The first liquid and the second liquid may also include any of a co-solvent, a surfactant, a biocide, an anti-kogation agent, a dispersant, and/or combinations thereof.

Although not shown, the 3D printer 100 may include additional delivery devices, e.g., printheads, that may deposit multiple liquids having different radiation absorption properties with respect to each other. By way of example, the multiple liquids may have different colors with respect to each other, may have different chemical compositions (e.g., different reactants and/or catalysts) with respect to each other, or the like. In the example in which the 3D printer 100 may deposit multiple liquids, the 3D printer 100 may include multiple printheads, in which each of the multiple printheads may deposit a liquid having a different radiation absorption property with respect to the other liquids.

The first delivery device 122 may be controlled to selectively deliver first liquid droplets onto build materials 106 in a layer 114 of the build materials 106. The first liquid droplets is delivered onto preselected areas of the layer 114, for instance, the areas containing build materials 106 that are to be fused together to form a part of a 3D object. However, instead of delivering the first liquid droplets throughout the preselected areas, according to an example, gaps are provided in the delivery of the liquid droplets. The gaps are provided to form heat sinks in the build materials 106. That is, the build materials 106 within the preselected area that do not receive liquid droplets from the first delivery device 122 may absorb heat from neighboring build materials 106 upon which the liquid droplets have been delivered, for instance, through thermal bleeding from those neighboring build materials 106. In this regard, as fusing radiation is applied to the build materials 106, the build materials 106 upon which the liquid droplets have been delivered may become heated through absorption of energy through the liquid droplets and the build materials 106 positioned in the gaps between the delivered liquid droplets may become heated through absorption of heat from the neighboring heated build materials 106.

According to an example, the gaps may be distributed within the preselected area over which the liquid droplets are to be delivered to prevent heat spikes from occurring across the build materials 106 in the preselected area. That is, a determination may be made that the temperatures of the build materials 106 in any number of locations within the preselected area either exceed or may exceed a predetermined threshold temperature either prior to or during application of the fusing radiation. In order to reduce or remove the possibility of the temperatures exceeding the predetermined threshold, gaps may be distributed at the various locations to more evenly distribute heat among the build materials 106 in those locations. That is, for instance, a greater distribution of gaps may be provided in locations that have or are predicted to have higher temperatures to thus distribute heat over a greater area and thus result in thermal uniformity across the build materials 106 in the preselected area. Various manners in which the distribution of the gaps may be determined for various locations within a preselected area of build materials 106 are described in detail below.

The second delivery device 124 may be controlled in similar respects to the first delivery device 122 to provide distributions of gaps in a preselected area upon which second liquid droplets are to be delivered by the second delivery device 124. In addition, in instances in which the 3D printer 100 includes additional delivery devices, similar control features may also be applied to those additional delivery devices. However, in other examples in which the second delivery device 124 is to deliver detailing agent droplets, the second delivery device 124 may be controlled to deposit detailing agent droplets into various gaps formed between the deposited first liquid droplets. In one regard, the detailing agent droplets may facilitate greater heat removal from the various gaps.

Following deposition of the first liquid droplets and/or the second liquid droplets onto selected areas of the layer 114 of the build materials 106, a first radiation generator 130 and/or a second radiation generator 132 may be implemented to apply fusing radiation onto the build materials 106 in the layer 114. Particularly, the radiation generator(s) 130, 132 may be activated and moved across the layer 114, for instance, along the directions indicated by the arrow 126 to apply fusing radiation in the form of light and/or heat onto the build materials 106. Examples of the radiation generators 130, 132 may include UV, IR or near-IR curing lamps, IR or near-IR light emitting diodes (LED), halogen lamps emitting in the visible and near-IR range, or lasers with desirable electromagnetic wavelengths. The types of radiation generators 130, 132 may depend, at least in part, on the type of active material used in the liquid(s). According to an example, the first delivery device 122, the second delivery device 124, the first fusing radiation generator 130, and the second fusing radiation generator 132 may be supported on a carriage (not shown) that may be scanned over the build area platform 102 in the directions denoted by the arrow 126.

Following application of liquid droplets during the multiple passes and following application of the radiation to fuse selected sections of the build materials 106 together, the build area platform 102 may be lowered as denoted by the arrow 112, e.g., along the z-axis. In addition, the recoater 108 may be moved across the build area platform 102 to form a new layer of build materials 106 on top of the previously formed layer 114. Moreover, the first delivery device 122 may deposit first liquid droplets and the second delivery device 124 may deposit second liquid droplets onto respective selected areas of the new layer of build materials 106 in single and/or multiple passes as discussed above. The above-described process may be repeated until parts of the 3D object have been formed in a predetermined number of layers to fabricate the 3D object.

Additionally, following a liquid deposition operation across a build material layer or following multiple liquid deposition operations across multiple build material layers, the first delivery device 122 and the second delivery device 124 may be positioned adjacent to a wiping mechanism 134. The wiping mechanism 134 may wipe the nozzles of the first delivery device 122 and the second delivery device 124, as well as the nozzles of additional delivery devices if included in the 3D printer 100. The wiping mechanism 134 may be moved to a position in which a surface, such as a cleaning web (not shown), of the wiping mechanism 134 is in contact with the exterior surfaces of the nozzles. The wiping mechanism 134 may be moved in the z-direction as noted by the arrow 136 to remove debris such as, build materials 106, liquid, dust, etc., that may be in contact with the exterior surfaces of the first delivery device 122 and the second delivery device 124, to maintain the delivery devices 122, 124 at or above desired performance levels.

As further shown in FIG. 1, the 3D printer 100 may include a controller 140 that may control operations of the build area platform 102, the build material supply 104, the recoater 108, the warming devices 120, the first delivery device 122, the second delivery device 124, the radiation generators 130, 132, and the wiping mechanism 134. Particularly, for instance, the controller 140 may control actuators (not shown) to control various operations of the 3D printer 100 components. The controller 140 may be a computing device, a semiconductor-based microprocessor, a central processing unit (CPU), an application specific integrated circuit (ASIC), and/or other hardware device. Although not shown, the controller 140 may be connected to the 3D printer 100 components via communication lines.

The controller 140 is also depicted as being in communication with a data store 142. The data store 142 may include data pertaining to a 3D object to be printed by the 3D printer 100. For instance, the data may include the locations in each build material layer that the first delivery device 122 is to deposit a first liquid and that the second delivery device 124 is to deposit a second liquid to form the 3D object. In one example, the controller 140 may use the data to control the locations on each of the build material layers that the first delivery device 122 and the second delivery device 124 respectively deposit droplets of the first and second liquids.

With reference now to FIG. 1B, there is shown a simplified top view of a plurality of parts 160, 162 in the process of being formed of build materials 106 located in preselected areas of a layer 114 of the build materials 106, according to an example. As shown, a first part 160 may include a relatively larger size than the smaller parts 162. In addition, the first part 160 and the second parts 162 may be formed through application of liquid droplets 164, for instance, fusing agent droplets, by the first delivery device 122 onto preselected areas of the layer 114 of build materials 114. FIG. 1B may thus depict a state in which the first delivery device 122 has delivered liquid droplets 164 onto the preselected areas and prior to application of fusing energy onto those areas.

The first part 160 is also depicted as including gaps 166 distributed among the liquid droplets 164. Particularly, the gaps 166 are depicted as being more highly concentrated along a central portion 168 of the first part 160 as compared with the outer and inner portions 170, 172 of the first part 160. In one regard, the gaps 166 may be formed in this manner because the central portion 168 of the first part 160 may absorb greater amounts of energy as compared to the outer and inner portions 170, 172 during application of fusing radiation because there may normally be a larger amount of liquid droplets 164 around the central portion 168 than the outer and inner portions 170.

For similar reasons, the liquid droplets 164 delivered to form the second parts 162 may not include gaps because the build materials 106 located in the areas upon which the second parts 162 are to be formed may not exceed a predetermined threshold temperature because of the lower amounts of liquid droplets 164 applied to those build materials 106. However, in other examples, gaps 166 may be provided between liquid droplets 164 that have been delivered onto build materials 106 to form parts of any size.

With reference now to FIG. 1C, there is shown an example graph 180 of a temperature distribution across a portion of the first part 160 taken along section 174 in FIG. 1B following application of fusing radiation onto the first part 160. That is, the graph 180 shows that the temperatures across the section 174 remain fairly constant or, in other words, the build materials 106 in the first part 160 are in thermal uniformity with respect to each other. For instance, thermal uniformity may be deemed to exist when there is a relatively small temperature difference, e.g., on the range of between about 1°C to about 10°C, at the different positions across the section 174. In other examples, thermal uniformity may be deemed to exist when the temperature difference is, for instance, between about 2°C to about 5°C. In one regard, the gaps 166 may enable excess heat in the build materials 106 that have received the liquid droplets 164 to be dissipated onto the build materials 106 that have not received the liquid droplets 164 to thus cause an even heat distribution across the build materials 106 in the first part 160. In addition, the build materials 106 that have not received the liquid droplets 164 may still be fused together through absorption of the excess heat while also preventing heat spikes or peaks in some of the build materials 106.

By forming the gaps 166 in selected areas of the part 160, the build materials 106 forming the part 160 in the layer 114 may be in thermal uniformity with respect to each other such that heat spikes, e.g., temperature differences that exceed greater than a predefined temperature from a low temperature, are prevented or minimized. By maintaining thermal uniformity throughout the build materials 106 forming the part 160, for instance, the amount of thermal bleeding onto other build materials 106 around those build materials 106 may be significantly reduced. In addition, the amount of thermal bleeding onto build materials 106 in a subsequently deposited layer of build materials 106 may also be significantly reduced. That is, the amount of undesired transfer of heat from one set of build materials 106 to another set of build materials may significantly be reduced to thus enable more accurate formation of parts in multiple layers 114 of build materials 106.

Although particular reference has been made to a single delivery device 122 as delivering liquid droplets 164 onto the build materials 106, in other examples, FIG. 1B may be construed as depicting a state in which multiple delivery devices 122, 124 have delivered respective liquid droplets 164 with controlled gaps 166 between the delivered liquid droplets onto the preselected areas of the layer 114 to form the first part 160.

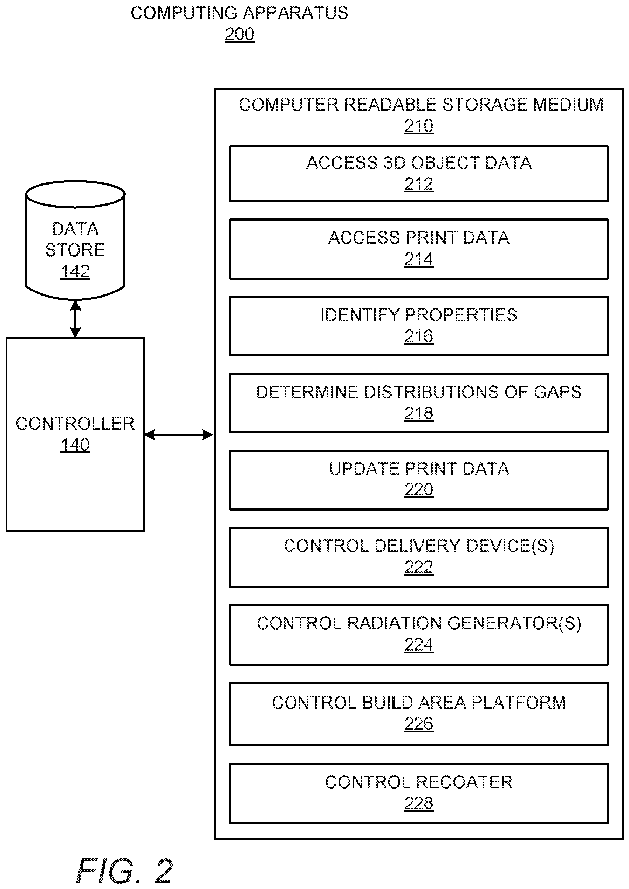

Turning now to FIG. 2, there is shown a simplified block diagram of an example computing apparatus 200. According to an example, the computing apparatus 200 may be implemented as part of the 3D printer 100. For instance, the computing apparatus 200 may be a command module or other control system of the 3D printer 100. In another example, the computing apparatus 200 may be separate from the 3D printer 100 and may be, for instance, a personal computer, a laptop computer, a server computer, or the like. It should be understood that the computing apparatus 200 depicted in FIG. 2 may include additional components and that some of the components described herein may be removed and/or modified without departing from a scope of the computing apparatus 200 disclosed herein.

The computing apparatus 200 is shown as including a controller 140 and a data store 142, which may be the same as the controller 140 and the data store 142 depicted in and described above with respect to FIG. 1. As such, the controller 140 and the data store 142 depicted in FIG. 2 are not described in detail and instead, the descriptions of the controller 140 and the data store 142 provided above with respect to the 3D printer 100 are intended to also describe these components with respect to the computing apparatus 200.

The computing apparatus 200 may also include a computer readable storage medium 210 on which is stored machine readable instructions 212-228 that the controller 140 may execute. More particularly, the controller 140 may fetch, decode, and execute the instructions 212-228 to access data pertaining to a 3D object to be printed 212, access print data for part to be formed by a delivery device 214, identify properties of the part to be formed/thermal properties of build materials 216, determine distributions at which gaps are to be formed in the delivery of liquid droplets 218, update print data 220, control a delivery device or multiple delivery devices 222, control a radiation generator or multiple radiation generators 224, control a build area platform 226, and control a recoater 228. As an alternative or in addition to retrieving and executing instructions, the controller 140 may include any number of electronic circuits that include components for performing the functionalities of the instructions 212-228. In any regard, and as discussed above, the controller 140 may communicate instruction signals to the various components of the 3D printer 100 via communication lines such that the components may operate in the manners described herein.

The computer readable storage medium 210 may be any electronic, magnetic, optical, or other physical storage device that contains or stores executable instructions. Thus, the computer readable storage medium 210 may be, for example, Random Access Memory (RAM), an Electrically Erasable Programmable Read-Only Memory (EEPROM), a storage device, an optical disc, and the like. The computer readable storage medium 210 may be a non-transitory machine-readable storage medium, where the term "non-transitory" does not encompass transitory propagating signals.

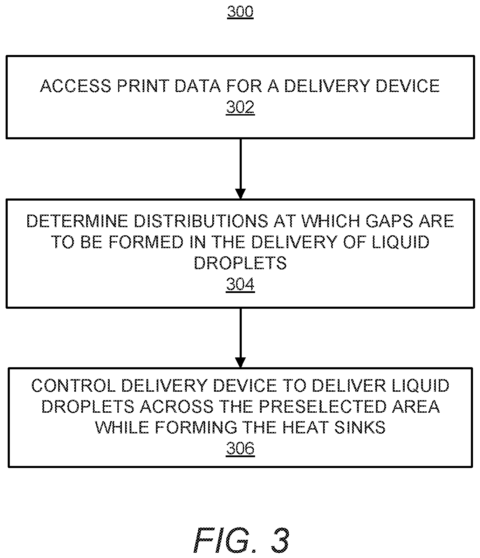

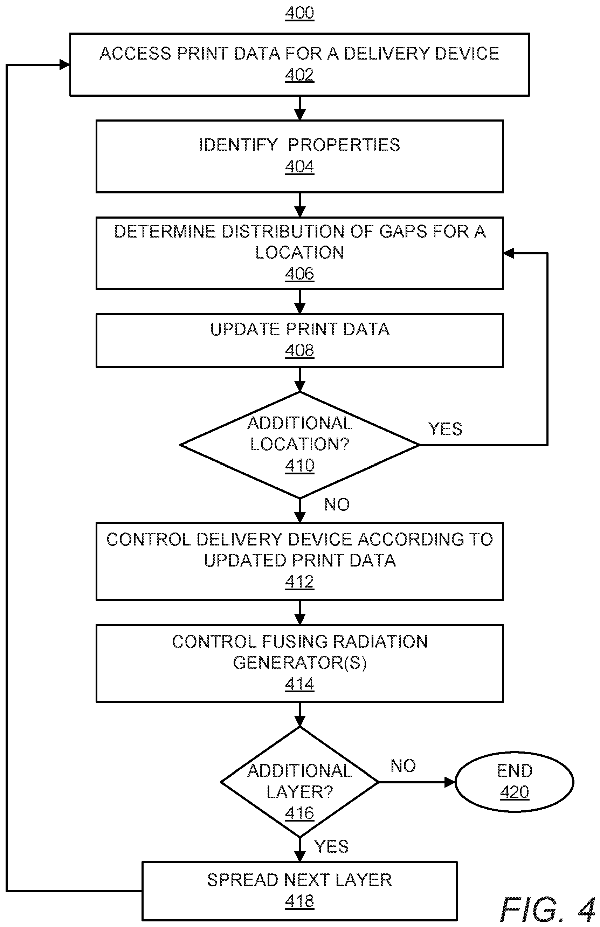

Various manners in which the computing apparatus 200 may be implemented are discussed in greater detail with respect to the methods 300 and 400 respectively depicted in FIGS. 3 and 4. Particularly, FIGS. 3 and 4, respectively, depict example methods 300 and 400 for controlling delivery of liquid droplets to include distributed gaps that are to form heat sinks, in which the heat sinks cause build materials 106 in a preselected area to be thermally uniform with respect to each other. It should be apparent to those of ordinary skill in the art that the methods 300 and 400 may represent generalized illustrations and that other operations may be added or existing operations may be removed, modified, or rearranged without departing from the scopes of the methods 300 and 400.

The descriptions of the methods 300 and 400 are made with reference to the 3D printer 100 illustrated in FIG. 1A, the illustration depicted in FIG. 1B, and the computing apparatus 200 illustrated in FIG. 2 for purposes of illustration. It should, however, be clearly understood that 3D printers and computing apparatuses having other configurations may be implemented to perform either or both of the methods 300 and 400 without departing from the scopes of the methods 300 and 400.

Prior to execution of either of the methods 300 and 400 or as parts of the methods 300 and 400, the controller 140 may execute instructions 212 stored on the computer-readable medium 210 to access data pertaining to a 3D object that is to be printed. By way of example, the controller 140 may access data stored in the data store 142 pertaining to a 3D object that is to be printed. The controller 140 may determine the number of layers 114 of build material 106 that are to be formed and the locations at which first liquid droplets and/or second liquid droplets are to be deposited on each of the respective layers of build material 106 in order to print the 3D object. The controller 140 may further determine when each of the recoater 108, the first delivery device 122, the second delivery device 124, the first fusing radiation generator 130, and the second fusing radiation generator 132 are to be moved across the build area platform 102 during each layer processing operation. In other examples, however, a processing device (not shown) outside of the 3D printer 100 may execute instructions to access the 3D object data and to make these determinations. In these examples, the processing device may communicate this information to the controller 140 and the controller 140 may implement this information in executing either or both of the methods 300 and 400.

With reference first to FIG. 3, at block 302, print data that includes instructions for a delivery device 122 to deliver liquid droplets 164 onto a preselected area on a layer 114 of build materials 106 may be accessed. The controller 140 may access the print data, which may include instructions for the delivery of the liquid droplets 164 onto the preselected area to form a part 160 in the layer 114, from the data store 142 or from an external source (not shown). The controller 140 may also access print data for the delivery of liquid droplets 164 on additional layers 114.

According to an example, the print data may indicate where the liquid droplets are to be deposited with respect to the layer 114 to form the part 160. In this regard, the print data may include instructions for controlling the timings at which the liquid droplets 164 are to be ejected from nozzles in the first delivery device 122 as the first delivery device 122 is scanned across the layer 114 such that the liquid droplets 164 are delivered onto the build materials 106 in the preselected area of the layer 114.

At block 304, distributions at which gaps 166 are to be formed in the delivery of the liquid droplets 164 within the preselected area may be determined based upon the print data. The determination of the distributions at which gaps 166 are to be formed may include a determination of the sizes of the gaps 166, a number of gaps 166 to be included, locations at which the gaps 166 are to be provided, and the like. As discussed above, the gaps 166 may form heat sinks in the build materials 106 that are to result in thermal uniformity across the build materials 106 in the preselected area. For instance, the controller 140 may execute the instructions 218 to determine the distributions at which the gaps 166 are to be formed in the delivery of the liquid droplets 164 such that the heat sinks formed from the gaps 166 result in the thermal uniformity across the build materials 106 in the preselected area. According to an example, the controller 140 may determine the distributions based upon the print data, which may include information such as the size and/or the geometry of the preselected area over which the liquid droplets 164 are to be deposited to form a part 160.

By way of example, the controller 140 may determine whether the part 160 includes sections that are larger than a predefined minimum size and may determine that liquid droplets 164 are to be delivered with gaps 166 to those sections of the part 160 having sizes that are larger than the predefined minimum size. In addition, the controller 140 may determine the distributions of the gaps 166 to correspond to the sizes of the sections. That is, the controller 140 may determine that larger sections are to receive a larger distribution of the gaps 166 and that smaller sections are to receive a smaller distribution of the gaps 166. In addition, the controller 140 may determine the placements of the gaps 166 based upon the sizes and/or geometries of the sections. That is, for instance, the controller 140 may determine that larger concentrations of gaps 166 are to be placed in locations of the sections at which the temperatures are likely to be the highest. The locations may include, for instance, the central locations of the sections. In this example, a larger concentration of gaps 166 may be formed near the centers of the sections as compared with the edges of the sections.

According to an example, the predefined minimum size as well as the distributions of the gaps 166 may be determined based upon various characteristics of the build materials 106 and/or the 3D printer 100 components. For instance, the predefined minimum size as well as the distributions of the gaps 166 may vary for build materials 106 formed of different types of materials as well as for 3D printers having various types of fusing radiation generators. By way of particular example, the predefined minimum size and the distributions of the gaps 166 may be determined through testing of various combinations of build materials and 3D printer components. The results of the testing may be stored in the data store 142 and the controller 140 may access this information in determining the distributions at which gaps 166 are to be formed in the delivery of liquid droplets 164 for the formation of a particular part by a particular 3D printer. In other examples, the controller 140 may determine distributions of the gaps 166 in other manners, such as through calculations of predicted temperatures and correlations with the predicted temperatures and gap sizes and distributions.

At block 306, the delivery device 122 may be controlled to deliver the liquid droplets 164 across the preselected area while forming the gaps 166 at the determined distributions. The controller 140 may execute the instructions 222 to control the delivery device 122 to deliver the liquid droplets 164 while forming the gaps 166. As discussed in greater detail herein below, the controller 140 may modify the print data such that the print data includes instructions to prevent delivery of the liquid droplets 164 onto areas where the gaps 166 are to be formed and may implement the modified print data in controlling the delivery device 122 to deliver the liquid droplets 164. According to an example, the controller 140 may generate a mask that identifies the locations at which the gaps 166 are to be formed, e.g., the timings at which the nozzles are to be prevented from firing as the delivery device 122 is scanned across the layer 114 to form the gaps 166. The controller 140 may apply the mask during delivery of the liquid droplets to thus control the formation of the gaps 166. In addition, the controller 140 may generate a second mask that identifies the locations at which a second delivery device 124 is to deliver detailing agent droplets, in which the locations may be the locations at which the gaps 166 have been formed. The controller 140 may apply the second mask during delivery of second liquid droplets to control deposition of detailing agent droplets into selected ones of the gaps 166.

With reference now to FIG. 4, at block 402, the controller 140 may access print data that includes instructions for a delivery device 122 to deliver liquid droplets 164 onto a preselected area on a layer 114 of build materials 106. The controller 140 may execute the instructions 214 to access the print data of a part 160 to be formed from the build materials 106 in the preselected area as discussed above with respect to block 302 in FIG. 3.

At block 404, various properties may be identified. For instance, the controller 140 may execute the instructions 216 to identify properties of the part 160 to be formed such as the sizes and geometries of sections of the part 160 as discussed above. The controller 140 may also execute the instructions 216 to identify various thermal properties of the build materials 106 such as the current temperatures of the build materials 106 located at various areas of the layer 114 (e.g., a heat profile of the build materials), temperatures at which the build materials 106 in the layer 114 are predicted to reach during application of fusing radiation onto the build materials 106, a historic heat map that indicates temperatures across a previously processed layer 114 of build materials 106, etc. The controller 140 may identify the thermal property information from data stored in the data store 142, for instance, by a temperature sensor.

At block 406, distributions at which gaps 166 are to be formed in the delivery of the liquid droplets 164 within a first location of the preselected area may be determined based upon the identified properties. For instance, the controller 140 may execute the instructions 218 to determine the distributions at which gaps 166 are to be formed based upon the print data and/or the identified thermal properties to maintain thermal uniformity across the build materials 106 that are to form the part 160. In addition, the controller 140 may determine the distribution of gaps 166 for a particular location in the preselected area, for instance, a central location of the preselected area. By way of example, the controller 140 may determine that a larger distribution of gaps 166 is to be formed in a location having a higher temperature and a smaller distribution of gaps 166 is to be formed in a location having a lower temperature. The controller 140 may make similar determinations based upon predicted temperatures at the various locations.

At block 408, the print data may be updated to include the determined distributions at which gaps 166 are to be formed. The controller 140 may execute the instructions 220 to update the print data.

At block 410, the controller 140 may determine whether a distribution of gaps 166 for an additional location of the preselected area is to be made. In response to a determination that the distribution of gaps 166 for an additional location of the preselected area is to be made, the controller 140 may determine an additional distribution of gaps 166 for the additional location. For instance, the controller 140 may determine that the additional location does not require as many heat sinks and may thus determine a smaller distribution of gaps 166 for the additional location. In addition, the controller 140 may update the print data with the additional distribution of gaps 166.

The controller 140 may repeat blocks 406-410 until distributions of gaps 166 for each of a plurality of locations in the preselected area are determined and the print data has been updated with the distributions of the gaps. Following the "no" condition at block 410, the delivery device 122 may be controlled to deliver the liquid droplets 164 across the preselected area while forming the gaps 166 at the determined distributions, as indicated at block 412. The controller 140 may execute the instructions 222 to control the delivery device 122 to deliver the liquid droplets 164 based upon the updated print data to thus cause the selective formation of gaps 166 during the delivery of the liquid droplets 164. The controller 140 may also execute the instructions 222 to control the second delivery device 124 to deliver fusing agent droplets into various ones of the gaps 166.

At block 414, the controller 140 may execute the instructions 224 to control either or both of the fusing radiation generators 130, 132 to provide fusing radiation onto the build materials 106 in the layer 114. The fusing radiation may cause the build materials 106 upon which the liquid droplets 164 have been deposited to be fused together, while also causing some of the build materials 106 positioned in the gaps 166 to absorb heat through thermal bleeding from the other build materials 106, which may also cause those build materials 106 to fuse together.

At block 416, the controller 140 may determine whether an additional layer 114 of build materials 106 is to be formed. The controller 140 may make this determination, for instance, based upon accessed information regarding the 3D part to be printed. In response to a determination that an additional layer is to be formed, a next layer of build materials 106 may be spread on top of the previous layer 114, as indicated at block 416. For instance, the controller 140 may execute the instructions 226 to control the build area platform 102 to be moved downward and may execute the instructions 228 to control the recoater 108 to spread additional build materials 106 across the previous layer 114. In addition, blocks 402-418 may be repeated until no additional layers are to be formed, at which point the method 400 may end, as indicated at block 420.

Although particular reference is made herein to a single delivery device 122, it should be understood that additional delivery devices 124 may be implemented to deliver respective liquid droplets while forming gaps in the delivered liquid droplets without departing from a scope of the present disclosure.

Some or all of the operations set forth in the methods 300 and 400 may be contained as utilities, programs, or subprograms, in any desired computer accessible medium. In addition, the methods 300 and 400 may be embodied by computer programs, which may exist in a variety of forms both active and inactive. For example, they may exist as machine readable instructions, including source code, object code, executable code or other formats. Any of the above may be embodied on a non-transitory computer readable storage medium. Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

## Claims

1. A three-dimensional (3D) printer (100) comprising:
a delivery device (122) to selectively deliver liquid droplets (164) onto a layer of build materials (106); and
a controller (140) to determine a preselected area on the layer of build materials at which the delivery device is to deliver liquid droplets; to determine a distribution at which gaps (166) are to be formed in the delivery of the liquid droplets within the preselected area, in which no liquid droplets are to be distributed; and to control the delivery device to deliver the liquid droplets across the preselected area while forming the gaps at the determined distribution, wherein the gaps are to form heat sinks in the build materials that are to prevent heat spikes from occurring across the build materials in the preselected area.

2. The 3D printer (100) according to claim 1, wherein the controller (140) is to determine the distribution, based on print data indicating properties of a part (160, 162) to be formed from the build materials (106), and based on thermal property information of the build materials, to be a distribution at which the gaps (166) form heat sinks that equalize temperatures of the build materials positioned across the preselected area during application of fusing radiation onto the build materials.

3. The 3D printer (100) according to claim 1, wherein the controller (140) is further to determine a heat profile of the build materials (106) across the preselected area and wherein the controller is to determine the distribution at which the gaps (166) are to be formed based upon the heat profile across the preselected area.

4. The 3D printer (100) according to claim 3, wherein the heat profile identifies a first location in the preselected area having a higher temperature and a second location in the preselected area having a lower temperature and wherein the controller (140) is to determine a first distribution at which gaps (166) are to be formed in the first location and to determine a second distribution at which gaps are to be formed in the second location to result in the prevention of heat spikes across the build materials (106) in the preselected area.

5. The 3D printer (100) according to claim 1, wherein the controller (140) is further to access a historic heat map and wherein the controller is to determine the distribution at which the gaps (166) are to be formed based upon the historic heat map and wherein the controller is to determine a first location in the preselected area that is predicted to reach a first temperature based upon the historic heat map and a second location in the preselected area that is predicted to reach a second temperature based upon the historic heat map, and wherein the controller is to determine a first distribution at which gaps are to be formed in the determined first location based upon the predicted first temperature and to determine a second distribution at which gaps are to be formed in the determined second location based upon the predicted second temperature.

6. The 3D printer (100) according to claim 1, wherein the controller (140) is to determine a size of the preselected area within which the liquid droplets (164) are to be delivered, wherein the controller is to identify a first location within the preselected area that is predicted to reach a first temperature during application of a fusing radiation based upon a position of the first location, the determined size of the preselected area, and thermal property information of the build materials (106), and wherein the controller is to determine the distribution at which the gaps (166) are to be formed at the first location within the preselected area based upon the predicted first temperature.

7. The 3D printer (100) according to claim 1, wherein the controller (140) is to generate a mask to be applied to print data for the delivery device (122) in selectively delivering the liquid droplets (164), wherein the mask is to identify the locations at which the gaps (166) are to be formed during selective delivery of the liquid droplets, and wherein the controller is to apply the mask in controlling the delivery device to deliver the liquid droplets across the preselected area while forming the gaps.

8. A method (300, 400) comprising:
accessing (302, 402) print data that includes instructions for a delivery device (122) to deliver liquid droplets (164) onto a preselected area on a layer of build materials (106);
determining (304, 406) distributions at which gaps (166) are to be formed in the delivery of the liquid droplets within the preselected area based upon the print data and based on thermal property information of the build materials, wherein the gaps, in which no liquid droplets are to be distributed, are to form heat sinks in the build materials that are to result in thermal uniformity across the build materials in the preselected area; and
controlling (306, 414) the delivery device to deliver the liquid droplets across the preselected area while forming the gaps at the determined distributions.

9. The method (300, 400) according to claim 8, further comprising:
identifying at least one of a size of the preselected area and a geometry of the preselected area, and wherein determining distributions at which gaps (166) are to be formed in the delivery of the liquid droplets (164) further comprises determining the distributions based upon the identified at least one of the size of the preselected area and the geometry of the preselected area.

10. The method (300, 400) according to claim 8, further comprising at least one of:
identifying the thermal property information of the build materials (106) in the preselected area; and
predicting the thermal property information of the build materials in the preselected area.

11. The method (300, 400) according to claim 9, wherein determining the distributions at which gaps (166) are to be formed in the delivery of the liquid droplets (164) further comprises:
determining (406) a first distribution at which gaps are to be formed in a first section of the preselected area; and determining (410) a second distribution at which gaps are to be formed in a second section of the preselected area.

12. The method (300, 400) according to claim 9, further comprising:
generating a mask to be applied to the print data for the delivery device (122) in selectively delivering the liquid droplets (164), wherein the mask is to identify the locations at which the gaps (166) are to be formed during selective delivery of the liquid droplets, and wherein controlling the delivery device further comprises applying the mask in controlling the delivery device to deliver the liquid droplets across the preselected area while forming the gaps.

13. A non-transitory computer readable medium (210) on which is stored machine readable instructions (212-228) to cause the three-dimensional printer of claim 1 to:
access print data for printing liquid droplets (164) onto a preselected area on a layer of build materials (106);
determine a distribution of gaps (166) to be included in the printing of the liquid droplets onto the preselected area, wherein no liquid droplets are to be distributed in the gaps, and wherein the gaps are to form heat sinks in the build materials that ensure thermal uniformity across the build materials in the preselected area; and
modify the print data to include the determined distribution of gaps in the printing of the liquid droplets.

14. The non-transitory computer readable medium (210) according to claim 13, wherein to determine the density, the machine readable instructions (212-228) are further to cause the three-dimensional printer of claim 1 to: apply the modified print data to control a delivery device (122) to print the liquid droplets (164) in the preselected area on the layer having the determined distribution of gaps (166).

## Patentansprüche

1. Dreidimensionaler (3D) Drucker (100), umfassend:
eine Abgabevorrichtung (122) zum selektiven Abgeben von Flüssigkeitströpfchen (164) auf eine Schicht von Baumaterialien (106); und
eine Steuerung (140) zum Bestimmen eines vorgewählten Bereichs auf der Schicht von Baumaterialien, auf der die Abgabevorrichtung Flüssigkeitströpfchen abgeben soll;
zum Bestimmen einer Verteilung, bei der bei der Abgabe der Flüssigkeitströpfchen innerhalb des vorgewählten Bereichs Lücken (166) gebildet werden sollen, in denen keine Flüssigkeitströpfchen verteilt werden sollen; und
zum Steuern der Abgabevorrichtung zum Abgeben der Flüssigkeitströpfchen über den vorgewählten Bereich, während die Lücken mit der bestimmten Verteilung gebildet werden, wobei die Lücken Kühlkörper in den Baumaterialien bilden sollen, die verhindern sollen, dass Wärmespitzen über die Baumaterialien in dem vorgewählten Bereich auftreten.

2. 3D-Drucker (100) nach Anspruch 1, wobei die Steuerung (140) die Verteilung basierend auf Druckdaten bestimmen soll, die die Eigenschaften eines Teils (160, 162) angeben, das aus den Baumaterialien (106) gebildet werden soll, und basierend auf Informationen über thermische Eigenschaften der Baumaterialien, um eine Verteilung darzustellen, bei der die Lücken (166) Kühlkörper bilden, die die Temperaturen der Baumaterialien, die über den vorgewählten Bereich positioniert sind, während des Anwendens von Schmelzstrahlung auf die Baumaterialien ausgleichen.

3. 3D-Drucker (100) nach Anspruch 1, wobei die Steuerung (140) ferner ein Wärmeprofil der Baumaterialien (106) über den vorgewählten Bereich bestimmen soll und wobei die Steuerung die Verteilung, bei der die Lücken (166) zu bilden sind, basierend auf dem Wärmeprofil über den vorgewählten Bereich bestimmen soll.

4. 3D-Drucker (100) nach Anspruch 3, wobei das Wärmeprofil eine erste Stelle in dem vorgewählten Bereich mit einer höheren Temperatur und eine zweite Stelle in dem vorgewählten Bereich mit einer niedrigeren Temperatur identifiziert und wobei die Steuerung (140) eine erste Verteilung bestimmen soll, bei der Lücken (166) an der ersten Stelle gebildet werden sollen, und eine zweite Verteilung bestimmen soll, bei der Lücken an der zweiten Stelle gebildet werden sollen, um das Verhindern von Wärmespitzen über die Baumaterialien (106) in dem vorgewählten Bereich zu bewirken.

5. 3D-Drucker (100) nach Anspruch 1, wobei die Steuerung (140) ferner auf eine historische Wärmekarte zugreifen soll und wobei die Steuerung basierend auf der historischen Wärmekarte die Verteilung bestimmen soll, bei der die Lücken (166) gebildet werden sollen, und wobei die Steuerung basierend auf der historischen Wärmekarte eine erste Stelle in dem vorgewählten Bereich, von der vorhergesagt wird, dass sie eine erste Temperatur erreicht, und basierend auf der historischen Wärmekarte eine zweite Stelle in dem vorgewählten Bereich bestimmen soll, von der vorhergesagt wird, dass sie eine zweite Temperatur erreicht, und wobei die Steueru ng basierend auf der vorhergesagten ersten Temperatur eine erste Verteilung bestimmen soll, bei der Lücken an der bestimmten ersten Stelle gebildet werden sollen, und basierend auf der vorhergesagten zweiten Temperatur eine zweite Verteilung bestimmen soll, bei der Lücken an der bestimmten zweiten Stelle gebildet werden sollen.

6. 3D-Drucker (100) nach Anspruch 1, wobei die Steuerung (140) eine Größe des vorgewählten Bereichs bestimmen soll, innerhalb von dem die Flüssigkeitströpfchen (164) abgegeben werden sollen, wobei die Steuerung eine erste Stelle innerhalb des vorgewählten Bereichs identifizieren soll, von der vorhergesagt wird, dass sie während des Anwendens einer Schmelzstrahlung eine erste Temperatur erreicht, basierend auf einer Position der ersten Stelle, der bestimmten Größe des vorgewählten Bereichs und Informationen überdie thermischen Eigenschaften der Baumaterialien (106), und wobei die Steuerung basierend auf der vorhergesagten ersten Temperatur die Verteilung bestimmen soll, bei der die Lücken (166) an der ersten Stelle innerhalb des vorgewählten Bereichs gebildet werden sollen.

7. 3D-Drucker (100) nach Anspruch 1, wobei die Steuerung (140) eine Maske erzeugen soll, die zum Drucken von Daten für die Abgabevorrichtung (122) beim selektiven Abgeben der Flüssigkeitströpfchen (164) angewendet werden soll, wobei die Maske dazu bestimmt ist, die Stellen zu identifizieren, an denen die Lücken (166) während der selektiven Abgabe der Flüssigkeitströpfchen gebildet werden sollen, und wobei die Steuerung die Maske beim Steuern der Abgabevorrichtung anwenden soll, um die Flüssigkeitströpfchen überden vorgewählten Bereich abzugeben, während die Lücken gebildet werden.

8. Verfahren (300, 400), umfassend:
Zugreifen auf (302, 402) Druckdaten, die Anweisungen für eine Abgabevorrichtung (122) zum Abgeben von Flüssigkeitströpfchen (164) auf einen vorgewählten Bereich auf einer Schichtvon Baumaterialien (106) enthalten;
Bestimmen (304, 406) von Verteilungen, bei denen Lücken (166) bei der Abgabe der Flüssigkeitströpfchen innerhalb des vorgewählten Bereichs gebildet werden sollen, basierend auf den Druckdaten und basierend auf Informationen überdie thermischen Eigenschaften der Baumaterialien, wobei die Lücken, in denen keine Flüssigkeitströpfchen verteilt werden sollen, Kühlkörper in den Baumaterialien bilden sollen, die eine thermische Gleichmäßigkeit über die Baumaterialien im vorgewählten Bereich bewirken sollen; und
Steuern (306, 414) der Abgabevorrichtung, um die Flüssigkeitströpfchen über den vorgewählten Bereich abzugeben, während die Lücken bei den bestimmten Verteilungen gebildet werden.

9. Verfahren (300, 400) nach Anspruch 8, ferner umfassend:
Identifizieren mindestens einer Größe des vorgewählten Bereichs und einer Geometrie des vorgewählten Bereichs, und wobei das Bestimmen von Verteilungen, bei denen Lücken (166) bei der Abgabe der Flüssigkeitströpfchen (164) gebildet werden sollen, ferner das Bestimmen der Verteilungen basierend auf der identifizierten mindestens einen von der Größe des vorgewählten Bereichs und der Geometrie des vorgewählten Bereichs umfasst.

10. Verfahren (300, 400) nach Anspruch 8, ferner umfassend mindestens eines von:
Identifizieren der Informationen über die thermischen Eigenschaften der Baumaterialien (106) in dem vorgewählten Bereich; und
Vorhersagen der Informationen über die thermischen Eigenschaften der Baumaterialien in dem vorgewählten Bereich.

11. Verfahren (300, 400) nach Anspruch 9, wobei das Bestimmen der Verteilungen, bei denen Lücken (166) bei der Abgabe der Flüssigkeitströpfchen (164) gebildet werden sollen, ferner umfasst:
Bestimmen (406) einer ersten Verteilung, bei der Lücken in einem ersten Abschnitt des vorgewählten Bereichs gebildet werden sollen; und
Bestimmen (410) einer zweiten Verteilung, bei der Lücken in einem zweiten Abschnitt des vorgewählten Bereichs gebildet werden sollen.

12. Verfahren (300, 400) nach Anspruch 9, ferner umfassend:
Erzeugen einer Maske, die auf die Druckdaten für die Abgabevorrichtung (122) beim selektiven Abgeben der Flüssigkeitströpfchen (164) angewendet werden soll, wobei die Maske die Stellen identifizieren soll, an denen die Lücken (166) während der selektiven Abgabe der Flüssigkeitströpfchen gebildet werden sollen, und wobei das Steuern der Abgabevorrichtung ferner das Anwenden der Maske beim Steuern der Abgabevorrichtung umfasst, um die Flüssigkeitströpfchen über den vorgewählten Bereich abzugeben, während die Lücken gebildet werden.

13. Nichtflüchtigescomputerlesbares Medium (210), auf dem maschinenlesbare Anweisungen (212-228) gespeichert sind, um den dreidimensionalen Drucker nach Anspruch 1 zu veranlassen zum:
Zugreifen auf Druckdaten zum Drucken von Flüssigkeitströpfchen (164) auf einen vorgewählten Bereich auf einer Schicht von Baumaterialien (106);
Bestimmen einer Verteilung von Lücken (166), die beim Drucken der Flüssigkeitströpfchen auf den vorgewählten Bereich berücksichtigt werden sollen, wobei keine Flüssigkeitströpfchen in den Lücken verteilt werden sollen und wobei die Lücken Kühlkörper in den Baumaterialien bilden sollen, die thermische Gleichmäßigkeit über die Baumaterialien im vorgewählten Bereich gewährleisten sollen; und
Ändern der Druckdaten, um die bestimmte Verteilung von Lücken beim Drucken der Flüssigkeitströpfchen einzuschließen.

14. Nichtflüchtiges computerlesbares Medium (210) nach Anspruch 13, wobei zum Bestimmen der Dichte die maschinenlesbaren Anweisungen (212-228) ferner den dreidimensionalen Drucker nach Anspruch 1 veranlassen sollen zum:
Anwenden der modifizierten Druckdaten, um eine Abgabevorrichtung (122) zu steuern, um die Flüssigkeitströpfchen (164) in dem vorgewählten Bereich auf der Schicht, die die bestimmte Verteilung der Lücken (166) aufweist, zu drucken.

## Revendications

1. Imprimante tridimensionnelle (3D) (100) comprenant :
un dispositif d'administration (122) pour administrer sélectivement des gouttelettes de liquide (164) sur une couche de matériaux de construction (106) ; et
un dispositif de commande (140) pour déterminer une zone présélectionnée sur la couche de matériaux de construction au niveau de laquelle le dispositif d'administration doit administrer des gouttelettes de liquide ; pour déterminer une distribution au niveau de laquelle des espaces (166) doivent être formés lors de l'administration des gouttelettes de liquide à l'intérieur de lazone présélectionnée, dans laquelle aucune gouttelette de liquide ne doit être distribuée ; et pour commander le dispositif d'administration de manière à ce qu'il administre les gouttelettes de liquide à travers la zone présélectionnée tout en formant les espaces au niveau de la distribution déterminée, les espaces devant former des dissipateurs de chaleur dans les matériaux de construction qui doivent empêcher des pointes de chaleur de se produire à travers les matériaux de construction dans la zone présélectionnée.

2. Imprimante 3D (100) selon la revendication 1, dans laquelle le dispositif de commande (140) doit déterminer la distribution, en fonction de données d'impression indiquant des propriétés d'une pièce (160, 162) à former à partir des matériaux de construction (106), et en fonction des informations de propriété thermique des matériaux de construction, à être une distribution au niveau de laquelle les espaces (166) forment des dissipateurs de chaleur qui égalisent des températures des matériaux de construction positionnés à travers la zone présélectionnée pendant l'application d'un rayonnement de fusion sur les matériaux de construction.

3. Imprimante 3D (100) selon la revendication 1, dans laquelle le dispositif de commande (140) doit en outre déterminer un profil de chaleur des matériaux de construction (106) àtravers la zone présélectionnée et dans laquelle le dispositif de commande doit déterminer la distribution au niveau de laquelle les espaces (166) doivent être formés en fonction du profil de chaleur àtravers la zone présélectionnée.

4. Imprimante 3D (100) selon la revendication 3, dans laquelle le profil thermique identifie un premier emplacement dans lazone présélectionnée ayant une température supérieure et un second emplacement dans lazone présélectionnée ayant une température inférieure et dans laquelle le dispositif de commande (140) doit déterminer une première distribution au niveau de laquelle des espaces (166) doivent être formés dans le premier emplacement et pour déterminer une seconde distribution au niveau de laquelle des espaces doivent être formés dans le second emplacement pour permettre d'empêcher des pointes de chaleur à travers les matériaux de construction (106) dans la zone présélectionnée.

5. Imprimante 3D (100) selon la revendication 1, dans laquelle le dispositif de commande (140) doit en outre accéder à une carte de chaleur historique et dans laquelle le dispositif de commande doit déterminer la distribution au niveau de laquelle les espaces (166) doivent être formés en fonction de lacarte de chaleur historique et dans laquelle le dispositif de commande doit déterminer un premier emplacement dans lazone présélectionnée qui est prédit pour atteindre une première température en fonction de la carte de chaleur historique et un second emplacement dans la zone présélectionnée qui est prédit pour atteindre une seconde température en fonction de lacarte de chaleur historique, et dans laquelle le dispositif de commande doit déterminer une première distribution au niveau de laquelle des espaces doivent être formés dans le premier emplacement déterminé en fonction de la première température prédite et pour déterminer une seconde distribution au niveau de laquelle des espaces doivent être formés dans le second emplacement déterminé en fonction de la seconde température prédite.

6. Imprimante 3D (100) selon la revendication 1, dans laquelle le dispositif de commande (140) doit déterminer une taille de la zone présélectionnée à l'intérieur de laquelle les gouttelettes de liquide (164) doivent être administrées, le dispositif de commande devant identifier un premier emplacement à l'intérieur de la zone présélectionnée prédite pour atteindre une première température pendant l'application d'un rayonnement de fusion en fonction d'une position du premier emplacement, de la taille déterminée de la zone présélectionnée et des informations de propriété thermique des matériaux de construction (106), et le dispositif de commande devant déterminer la distribution au niveau de laquelle les espaces (166) doivent être formés au premier emplacement à l'intérieur de la zone présélectionnée en fonction de la première température prédite.

7. Imprimante 3D (100) selon la revendication 1, dans laquelle le dispositif de commande (140) doit générer un masque à appliquer pour imprimer des données pour le dispositif d'administration (122) en administrant sélectivement les gouttelettes de liquide (164), dans laquelle le masque doit identifier les emplacements au niveau desquels les espaces (166) doivent être formés pendant l'administration sélective des gouttelettes de liquide, et dans laquelle le dispositif de commande doit appliquer le masque en commandant le dispositif d'administration à administrer les gouttelettes de liquide à travers la zone présélectionnée tout en formant les espaces.

8. Procédé (300, 400) comprenant :
l'accès (302, 402) aux données d'impression qui incluent des instructions pour un dispositif d'administration (122) afin d'administrerdes gouttelettes de liquide (164) sur une zone présélectionnée sur unecouche de matériaux de construction (106) ;
la détermination (304, 406) de distributions au niveau desquelles des espaces (166) doivent être formés lors de l'administration des gouttelettes de liquide à l'intérieur de la zone présélectionnée en fonction des données d'impression et en fonction des informations de propriété thermique des matériaux de construction, dans lequel les espaces, dans lesquels aucune gouttelette de liquide ne doivent être administrées, doiventformer des dissipateurs de chaleur dans les matériaux de construction qui doivent permettre une uniformité thermique à travers les matériaux de construction dans la zone présélectionnée ; et
la commande (306, 414) du dispositif d'administration pour administrer les gouttelettes de liquide à travers la zone présélectionnée tout en formant les espaces au niveau des distributions déterminées.

9. Procédé (300, 400) selon la revendication 8, comprenant en outre :
l'identification d'une taille de la zone présélectionnée et/ou d'une géométrie de la zone présélectionnée, et dans lequel la détermination des distributions au niveau desquelles des espaces (166) doivent être formés lors de l'administration des gouttelettes de liquide (164) comprend en outre la détermination des distributions en fonction de l'identification de la taille de la zone présélectionnée et/ou de la géométrie de la zone présélectionnée.

10. Procédé (300, 400) selon la revendication 8, comprenant en outre :
l'identification des informations de propriété thermique des matériaux de construction (106) dans la zone présélectionnée ; et/ou
la prédiction des informations de propriété thermique des matériaux de construction dans la zone présélectionnée.

11. Procédé (300, 400) selon la revendication 9, dans lequel la détermination des distributions au niveau desquelles des espaces (166) doivent être formés lors de l'administration des gouttelettes de liquide (164) comprend en outre :
la détermination (406) d'une première distribution au niveau de laquelle des espaces doivent être formés dans une première section de la zone présélectionnée ; et
la détermination (410) d'une seconde distribution au niveau de laquelle des espaces doivent être formés dans une seconde section de lazone présélectionnée.

12. Procédé (300, 400) selon la revendication 9, comprenant en outre :
la génération d'un masque à appliquer aux données d'impression pour le dispositif d'administration (122) en administrant sélectivement les gouttelettes de liquide (164), dans lequel le masque doit identifier les emplacements au niveau desquels les espaces (166) doivent être formés pendant l'administration sélective des gouttelettes de liquide, et dans lequel la commande du dispositif d'administration comprend en outre l'application du masque dans la commande du dispositif d'administration pour administrer les gouttelettes de liquide à travers la zone présélectionnée tout en formant les espaces.

13. Support lisible par ordinateur non transitoire (210) sur lequel sont stockées des instructions lisibles par machine (212-228) pour amener l'imprimante tridimensionnelle selon la revendication 1 à :
accéder aux données d'impression pour imprimer des gouttelettes de liquide (164) sur une zone présélectionnée sur une couche de matériaux de construction (106) ;
déterminer une distribution d'espaces (166) à inclure dans l'impression des gouttelettes de liquide sur la zone présélectionnée, aucune gouttelette de liquide ne devant être distribuées dans les espaces, et les espaces devant former des dissipateurs de chaleur dans les matériaux de construction qui garantissent l'uniformité thermique à travers les matériaux de construction dans la zone présélectionnée ; et
modifier les données d'impression pour inclure la distribution déterminée des espaces dans l'impression des gouttelettes de liquide.

14. Support lisible par ordinateur non transitoire (210) selon la revendication 13, dans lequel pour déterminer ladensité, les instructions lisibles par machine (212-228) doivent en outre amener l'imprimante tridimensionnelle selon la revendication 1 à:
appliquer les données d'impression modifiées pour commander un dispositif d'administration (122) afin d'imprimer les gouttelettes de liquide (164) dans la zone présélectionnée sur la couche ayant la distribution déterminée d'espaces (166).
